# EUROPÄISCHE PATENTSCHRIFT

(11) **EP 1 228 331 B1**
(45) Veröffentlichungstag und Bekanntmachung des Hinweises auf die Patenterteilung: **13.08.2003**
(21) Anmeldenummer: 01947423.8
(22) Anmeldetag: 29.06.2001
(51) Int. Cl.: F16L 25/00, F16L 37/088

(54) **ANSCHLUSSARMATUR FÜR UMFANGSGERIPPTE LÄNGLICHE KÖRPER MIT EINEM EINRASTENDEN HALTEVORSPRUNG**
CONNECTING FITTING FOR PERIPHERALLY RIBBED LONGITUDINAL BODIES WITH A LOCKING RETAINING PROJECTING ELEMENT
ARMATURE DE RACCORDEMENT AVEC SAILLIE DE MAINTIEN ENCASTRABLE DESTINEE A DES CORPS LONGITUDINAUX RAINURES DE MANIERE PERIPHERIQUE

(30) Priorität: 06.07.2000 DE 10032926
(43) Veröffentlichungstag der Anmeldung: 07.08.2002
(73) Patentinhaber: Anton Hummel Verwaltungs-GmbH, D-79183 Waldkirch (DE)
(72) Erfinder: BARTHOLOMÄ, Mario, 79297 Winden (DE); ZÜGEL, Fritz, 79183 Waldkirch (DE); GÖTZ, Volker, 79341 Kenzingen (DE); GERBER, Philipp, 79261 Gutach-Bleiback (DE)
(74) Vertreter: Maucher, Wolfgang, Dipl.-Ing.
(86) Internationale Anmeldenummer: EP0107430
(87) Internationale Veröffentlichungsnummer: WO02002983

(56) Entgegenhaltungen:
- EP-A- 1 028 282
- DE-A- 19 932 307
- US-A- 5 934 709
- US-A- 6 019 399

## Beschreibung

Die Erfindung betrifft eine Anschlussarmatur für umfangsgerippte längliche Körper wie Rohre, Schläuche oder Kabel, insbesondere für Wellschläuche, mit einer Haltehülse, in welche der längliche Körper oder Wellschlauch axial einsteckbar und durch wenigstens einen bei dem Einstecken radial nach außen ausweichenden und dann in eine an seinem Umfang verlaufende Vertiefung, insbesondere in ein Wellental, einrastenden Haltevorsprung verankerbar ist, wobei als Haltevorsprung im Inneren der Haltehülse wenigstens ein in axialer Richtung gelagerter Haltering angeordnet ist, der an seinem Umfang durch einen Schlitz unterbrochen und durch Verbreiterung des Schlitzes innerhalb seiner Lagerung in radialer Richtung elastisch zumindest so weit aufweitbar ist, dass sein Innenquerschnitt dem größten Außenquerschnitt des länglichen Körpers oder einer Welle des Wellschlauches oder dergleichen entspricht, so dass er beim Einschieben des länglichen Körpers oder Wellschlauches ausweicht und mit einer Vertiefung oder einem Wellental verrastbar ist.

Eine derartige Anschlussarmatur ist in DE 199 32 307 A1 beschrieben. Dabei ist der Innendurchmesser des entspannten Halterings kleiner als der Außendurchmesser der Fläche, an welcher er in Gebrauchsstellung anliegt. Er hat also ohne eingesteckten länglichen Körper einen entsprechend kleineren Außendurchmesser, als es seiner Außenabmessung in Verriegelungsposition entspricht. Es ist somit nicht auszuschließen, dass ein vormontierter Haltering ohne eingesetzten länglichen Körper aus der Haltehülse wieder herausfällt.

Aus der US-A-6 019 399 ist eine vergleichbare Anschlussarmatur bekannt. Dabei ist die Innenabmessung einer der Begrenzungen der Lagerung des Sperrrings größer als die Außenabmessung des zusammengedrückten Halterings, so dass ein ungewolltes Austreten des Halterings aus seiner Lagerung nicht ausgeschlossen werden kann.

Es besteht deshalb die Aufgabe, eine Anschlussarmatur der eingangs definierten Art zu schaffen, bei deren Anwendung nicht nur die Verankerung des länglichen Körpers oder Wellschlauches über einen großen Umfangsbereich wirksam und die Herstellung zumindest der Haltehülse einfach ist, sondern der Haltering auch ohne länglichen Körper nicht ungewollt aus seiner Lagerstelle entnommen werden kann.

Die Lösung dieser Aufgabe besteht darin, dass die Breite des Schlitzes des Halteringes so bemessen ist, dass bei gegenseitiger Berührung der beidseitigen Begrenzungen des Schlitzes die Außenabmessung des Halteringes gleich oder größer ist als die beiden engsten, sich dem Sitz des Halteringes in beiden axialen Richtungen anschließenden Innenabmessungen der Haltehülse.

Es kann also ein separater Haltering innerhalb der Haltehülse angeordnet werden, wodurch deren Herstellung vereinfacht wird. Dieser Haltering kann in axialer Richtung gelagert und festgelegt, also gegen axiale Verschiebungen weitestgehend gesperrt oder gesichert sein, weicht aber in radialer Richtung unter Aufweitung seines Innenquerschnittes aus, wenn der umfangsgerippte längliche Körper eingeschoben wird. Ist hinter einer Umfangsrippe eine Vertiefung oder ein Wellental in dem Bereich dieses Halteringes verschoben, kann er aufgrund seiner Elastizität selbsttätig darin eingreifen und einrasten und legt somit den länglichen Körper in axialer Richtung fest, weil er selbst ebenfalls in axialer Richtung fixiert ist. Es kann der längliche Körper also innerhalb der Anschlussarmatur und deren Haltehülse fixiert werden und ist von außen nicht mehr oder nicht ohne weiteres zugänglich, kann also auch nicht ungewollt gelöst werden. Gleichzeitig wird dabei der längliche Körper über einen großen Umfangsbereich verankert, der von dem entspannten Haltering und dessen Innenumfang vorgegeben wird.

Der über den gesamten Querschnitt des Halterings reichende, seinen Umfang unterbrechende Schlitz und die Aufweitbarkeit des Halterings durch Verbreiterung dieses Schlitzes ermöglicht die Verwendung vor allem von Kunststoff-Halteringen, die eine gute Eigenfestigkeit haben, durch die Schlitzung aber auch die elastische Aufweitung und selbständige Rückkehr in die Ausgangslage zum Verrasten ermöglichen. Außer einem oder mehreren solchen Halteringen aus Kunststoff sind aber auch ein oder mehrere Halteringe aus Metall möglich.

Durch die erfindungsgemäße Bemessung der Breite des Schlitzes des Halteringes kann sichergestellt werden, dass der Haltering nicht zu sehr in radialer Richtung einwärts verformt und danach beispielsweise zusammen mit dem länglichen Körper aus der Hülse herausgezogen werden kann. Auch ohne länglichen Körper ist so eine ungewollte Entnahme des Halteringes aus seiner Lagerstelle in der Hülse verhindert, so dass er dadurch unverlierbar ist. Dabei ist normalerweise eine Verformung des Halteringes in der Weise, dass sein Schlitz vollständig geschlossen wird, dann nicht möglich, wenn der längliche Körper in den Haltering eingeführt ist.

Der Schlitz kann den Haltering radial oder schräg verlaufend unterbrechen. Dabei läßt sich ein etwa radial verlaufender Schlitz einfacher fertigen, während ein schräger Schlitz dazu führt, dass trotz der Schlitzung des Ringes aufgrund einer gewissen Überlappung der den Schlitz begrenzenden Flächen insgesamt ein geschlossener Haltering vorliegt.

Eine Ausgestaltung der Erfindung von ganz erheblicher und vorteilhafter Bedeutung kann darin bestehen, dass die der Einsteckrichtung des länglichen Körpers oder Wellschlauches zugewandte Stirnseite des Halteringes zumindest über einen Teil seiner radialen Breite zur Mitte des Halteringes hin schräg abfallen, insbesondere konisch oder trichterförmig geformt ist. Dies erleichtert es, den von außen praktisch nicht zugänglichen Haltering allein durch das Einschieben des länglichen Körpers, der zunächst auf diese etwa trichterförmige Stirnseite des noch unverformten Ringes trifft, in radialer Richtung aufzuweiten. Die beim Einstecken auf die schräge Stirnseite ausgeübte Kraft wird über die Schrägflächen in die erwünschte radiale Verformung umgewandelt.

Dabei kann die Dicke oder axiale Abmessung des Halteringes an seiner Innenseite beziehungsweise seinem Innendurchmesser kleiner als die axiale Abmessung des Wellschlauches und seiner radial weiter außen liegende größte Dicke größer als die axiale Abmessung einer Vertiefung oder eines Wellentales sein. Dadurch wird gleichzeitig eine Zentrierwirkung an dem länglichen Körper durch den in eine Vertiefung oder ein Wellental wieder einrastenden Haltering erzeugt, also eine axiale Positionierung bewirkt. Der Ringquerschnitt ist also zur Mitte hin etwas konisch sich verjüngend und paßt damit in eine Vertiefung oder ein Wellental hinein, ist weiter außen aber breiter als eine solche Vertiefung oder ein solches Wellental, um dadurch an beiden Rändern dieser Vertiefung oder dieses Wellentales zur Anlage zu kommen.

Der Haltering kann ferner an seiner der Einsteckrichtung zugewandten Stirnseite von seiner Stelle größter axialer Dicke ausgehend nach außen zu seinem größten Durchmesser hin eine sich vermindernde Dicke, insbesondere eine Schrägfläche oder einen Konus aufweisen und die Lagerungsstelle in der Haltehülse kann als Ringnut ausgebildet sein, deren Begrenzung zumindest auf der Seite dieser Schrägfläche des Halteringes insbesondere in analoger Richtung schräg geformt ist, und der Durchmesser der Ringnut kann wenigstens so viel größer als der Außendurchmesser des Halteringes sein, daß der Haltering beim Einführen des länglichen Körpers oder des Wellschlauches oder beim Lösen des länglichen Körpers oder des Wellschlauches mit seinem Innendurchmesser zumindest auf den größten Außendurchmesser der von dem Haltering in Gebrauchsstellung übergriffenen Umfangsrippe oder -welle ist. Die in der Hülse angeordnete Ringnut zur Aufnahme des Halteringes ist also an ihrem Umfang beziehungsweise dem Boden größer als der entspannte Haltering, so daß dieser innerhalb dieser Ringnut aufgeweitet werden kann, um den länglichen Körper oder Wellschlauch hindurchführen zu können.

Eine Vereinfachung der Handhabung der Anschlußarmatur und insbesondere der Möglichkeit, den länglichen Körper oder Wellschlauch wieder aus der Haltehülse zu lösen, kann darin bestehen, daß an der Haltehülse ein in den Bereich des Halteringes ragendes Lösewerkzeug angeordnet ist, welches zum Aufweiten des Halteringes entgegen seiner elastischen Rückstellkraft dient. Somit kann sowohl beim Einführen des länglichen Körpers mit dem Ziel, eine Verrastung nicht gleich an der ersten, sondern einer in Einsteckrichtung weiter hinten liegenden Vertiefung zu bewirken, als auch beim Demontieren der Haltering mit Hilfe des Lösewerkzeuges aufgeweitet und dadurch der Durchtritt durch den Haltering entsprechend groß gemacht werden, um die Umfangsrippen oder -wellen hindurchschieben zu können. Wird das Lösewerkzeug dann wieder zurückverstellt oder außer Eingriff gebracht, kann der Haltering seine Haltefunktion wieder ausüben.

Eine ganz besonders zweckmäßige Ausführungsform der Anschlußarmatur mit Lösewerkzeug kann dabei darin bestehen, daß das Lösewerkzeug als deckelartiger Abschluß der Haltehülse insbesondere auf der Einsteckseite für den länglichen Körper oder Wellschlauch ausgebildet ist, welcher Abschluß einen nach innen in die Haltehülse ragenden Bund oder Stutzen oder einzelne Finger vorzugsweise mit einer konischen Formgebung am freien Ende oder Rand hat, die die radial einwärts gerichtete Schrägfläche an dem Haltering zumindest beim axialen Eindrücken dieses Lösewerkzeuges beaufschlagt oder hintergreift, wobei die axiale Beweglichkeit für dieses Lösewerkzeug und der oder die Winkel der zusammenwirkenden Schrägflächen so gewählt sind, daß der Haltering - durch die axiale Beaufschlagung mit dem Lösewerkzeug - radial aus dem Bereich der Vertiefung oder Welle aufweitbar ist. Ebenso ist er natürlich mit Hilfe des Lösewerkzeuges auch aufweitbar, bevor ein länglicher Körper oder Wellschlauch eingeführt ist, damit dieser tiefer als bis zu seiner ersten Vertiefung oder zu seinem ersten Wellental eingeführt werden kann. Die stirnseitige trichterförmige Schrägfläche an dem Haltering wird also entweder dazu benutzt, diesen durch den länglichen Körper selbst oder aber durch das Lösewerkzeug axial zu beaufschlagen und dadurch eine radiale Aufweitung zu bewirken.

Die der Einsteckrichtung entgegengesetzte Unterseite des Halteringes kann ebenfalls von außen nach innen geneigt und zumindest über einen Teil der Breite, vorzugsweise über die gesamte radiale Breite des Halteringes schräg verlaufen, so daß der Ringquerschnitt zumindest in dem in eine Vertiefung oder in ein Wellental eingreifenden Bereich insgesamt konisch ist.

Dabei kann die der schrägen Begrenzung der den Haltering aufnehmenden Ringnut abgewandte zweite Begrenzung heben und in einer radialen Ebene angeordnet sein und der Haltering kann zumindest während des Einsteckvorganges an dieser ebenen Begrenzung der Ringnut mit seinem radial äußeren Randbereich anschlagen oder aufliegen. Bei seiner elastischen Rückverformung gleitet dann dieser äußere Randbereich auf der etwa ebenen Begrenzung der Ringnut, kann sich also nicht an Oberflächenrauhigkeiten dieser Begrenzung verhaken und erreicht somit sicher seine Verankerungsposition. Gleichzeitig wird durch diese Schrägung auch der der Einsteckrichtung abgewandten Stirnseite des Halteringes dessen selbsttätiges Eingreifen in eine Vertiefung oder ein Wellental erleichtert, selbst wenn die gegenseitige axiale Zuordnung nicht ganz präzise ist.

Vor allem bei Kombination einzelner oder mehrerer der vorbeschriebenen Merkmale und Maßnahmen ergibt sich eine Anschlußarmatur, mit welcher insbesondere Wellschläuche, aber auch andere mit Umfangsrippen versehen Körper auf einfache Weise durch Einstecken formschlüssig verbunden werden können, wobei dennoch auch ein nachträgliches Lösen wieder möglich ist, dieses aber nicht so einfach auch für unbefugte Personen erkennbar ist, wie es bei Haltehülsen mit radial ausbiegbaren Haltezungen der Fall ist. Gleichzeitig wird eine weitgehend symmetrische Halterung praktisch am gesamten Umfang des länglichen Körpers ermöglicht und dennoch kann die Herstellung der Haltehülse und das dazu erforderliche Werkzeug vereinfacht sein.

Nachfolgend ist ein Ausführungsbeispiel der Erfindung anhand der Zeichnungen näher beschrieben. Es zeigt in zum Teil schematisierter Darstellung:
- Fig.1: einen Längsschnitt einer in axialer Richtung abgebrochen dargestellten Haltehülse einer Anschlußarmatur für einen Wellschlauch, wobei im Inneren der Haltehülse ein radial aufweitbarer Haltering sowie ein daran angreifendes Lösewerkzeug vorgesehen sind, um die Anschlußarmatur für den Wellschlauch zu bilden,
- Fig.2: eine der Fig.1 entsprechende Darstellung nach dem Einschieben und Verrasten des Wellschlauches, der dadurch in axialer Richtung innerhalb der Anschlußarmatur festgelegt ist,
- Fig.3: eine den Figuren 1 und 2 entsprechende Darstellung, wobei das Lösewerkzeug in axialer Richtung in die Haltehülse eingedrückt und dadurch der von diesem Lösewerkzeug beaufschlagte Haltering radial so weit aufgeweitet ist, daß der Wellschlauch entgegen der Einsteckrichtung wieder widerstandslos durch die entsprechend erweiterte Innenöffnung dieses Halteringes herausgezogen werden kann,
- Fig.4: eine Draufsicht einer Ausführungsform des Halteringes mit einem schrägen Schlitz, der den Haltering hinsichtlich seines Umfanges unterbricht,
- Fig.5: eine Draufsicht eines abgewandelten Halteringes mit einem in radialer Richtung verlaufenden Schlitz, sowie
- Fig.6: eine schaubildliche Darstellung des Halteringes gemäß Fig.5.

Eine im ganzen mit 1 bezeichnete Anschlußarmatur dient zum Fixieren oder Befestigen oder Kuppeln von umfangsgerippten länglichen Körpern, also Gegenständen, deren äußere Oberfläche abwechselnd ringförmige Vorsprünge und Vertiefungen hat, beispielsweise von Wellschläuchen 2, wie es im Ausführungsbeispiel dargestellt ist.

Diese Anschlußarmatur 1 weist eine Haltehülse 3 auf, in welche der längliche Körper, also im Ausführungsbeispiel der Wellschlauch 2, axial einsteckbar und durch einen noch zu beschreibenden Haltevorsprung verankerbar ist.

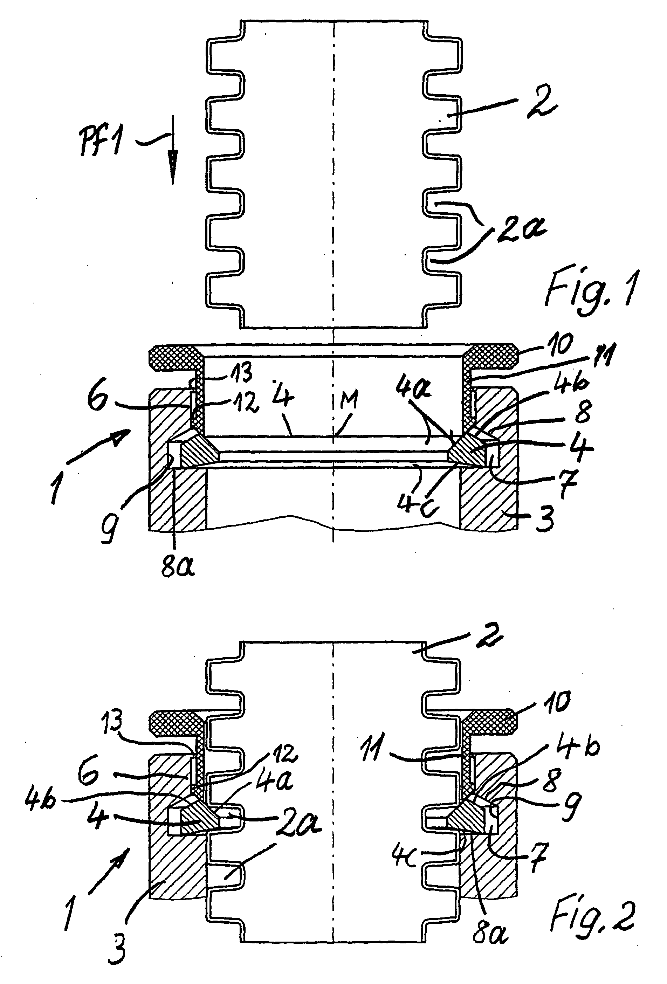

Als Haltevorsprung dient dabei wenigstens ein im Inneren der Haltehülse 3 in axialer Richtung gelagerter oder festgelegter Haltering 4, der innerhalb seiner Lagerung in radialer Richtung elastisch so weit aufweitbar ist, daß sein Innenquerschnitt oder Innendurchmesser, also seine innere lichte Weite, dem größten Außenquerschnitt des länglichen Körpers oder Wellschlauches 2 entspricht, so daß er beim Einschieben in Richtung des in Fig.1 erkennbaren Pfeiles Pf1 des Wellschlauches 2 ausweicht und so weit radial vergrößert wird, daß die Welle oder Wellen des Wellschlauches durch diesen Haltering 4 hindurchtreten können. Gelangt eine Vertiefung oder Wellental 2a in den Bereich des Halteringes 4, kann er aufgrund seiner Elastizität darin einrasten und somit den Wellschlauch 2 innerhalb der Haltehülse 3 in axialer Richtung festlegen.

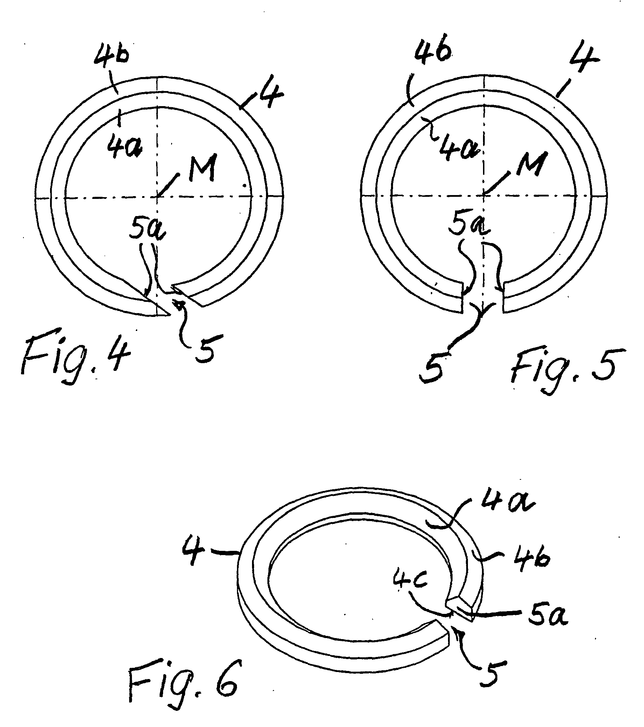

Gemäß den Figuren 4 bis 6 ist der Haltering 4 an seinem Umfang durch einen Schlitz 5 unterbrochen und kann also durch eine Verbreiterung dieses Schlitzes 5 aufgeweitet werden. Die Breite dieses Schlitzes 5 ist sowohl im Ausführungsbeispiel nach Fig.4 als auch nach Fig.5 so bemessen, daß bei gegenseitiger Berührung der beidseitigen Begrenzungen 5a des Schlitzes 5, also wenn der Schlitz 5 völlig zusammengedrückt ist, die Außenabmessung oder der größte Durchmesser des Halteringes 4 größer als die in Auszugsrichtung entgegen dem Pfeil Pf1 des Wellschlauches 2 angeordnete engste Stelle 6 der Haltehülse 3 ist. Wird der in Gebrauchsstellung innerhalb der Haltehülse 3 fixierte Wellschlauch 2 entgegen der Einsteckrichtung mit einer Zugkraft belastet, kann also der Haltering 4 auf keinen Fall so weit radial zusammengedrückt werden, daß er aus seiner Lagerstelle herausgelangen kann.

Die Figuren 4 und 5 zeigen dabei, daß der Schlitz 5 den Haltering 4 radial (Fig.5 und 6) oder schräg verlaufend (Fig.4) unterbrechen kann.

Die der Einsteckrichtung gemäß Pf1 des Wellschlauches 2 zugewandte Stirnseite des Halteringes 4 ist in allen Ausführungsbeispielen über einen Teil seiner radialen Breite zur Mitte M des Halteringes 4 hin schräg abfallend, im Ausführungsbeispiel konisch oder trichterförmig geformt. Dies erkennt man besonders deutlich in den Figuren 1 bis 3 sowie auch in Fig.6. Diese Trichterfläche 4a ragt in Ausgangslage vor der Montage des Wellschlauches 2 in den Innenquerschnitt der Haltehülse 3, wie man es deutlich in Fig.1 erkennt. Wird der Wellschlauch 2 in Richtung des Pfeiles Pf1 eingeschoben, stößt er mit seiner ersten Welle oder Umfangsrippe auf diese Trichterfläche 4a, wo die axiale Bewegung und Kraft zumindest teilweise in eine radiale Kraft umgewandelt wird, die den Haltering 4 in radialer Richtung aufweitet, so daß eine einfache Steckbewegung an dem Wellschlauch 2 ausreicht, um ihn in die Haltehülse 3 einzuführen und dabei den Haltering 4 aufzuweiten, der dann in einem der nächsten Wellentäler 2a einrasten kann, wenn die Druckkraft in Richtung des Pfeiles Pf1 auf den Wellschlauch 2 beendet wird.

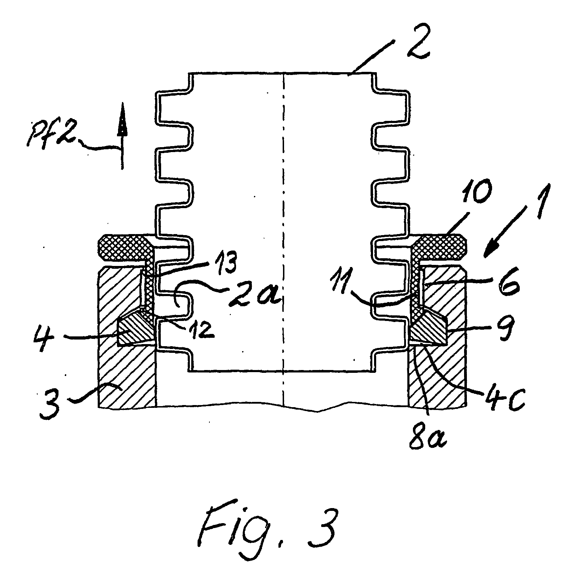

Dabei wird vor allem anhand der Fig.2 deutlich, daß die axiale Abmessung des Halteringes 4 an seiner Innenseite beziehungsweise seinem Innendurchmesser kleiner als die axiale Abmessung eines Wellentales 2a des Wellschlauches 2 oder dergleichen und seine radial weiter außenliegende größte Dicke größer als die axiale Abmessung einer Vertiefung oder eines Wellentales 2a ist. Dies ermöglicht es, daß der Haltering 4 mit seinem radial weiter innenliegenden Teil in eine solche Vertiefung oder ein Wellental 2a eintritt, aber auch noch etwas radial darüber vorsteht. Gemäß Fig.2 greift dabei etwa die Hälfte der Trichterfläche 4a in ein Wellental 2a ein.

Damit bei einer Zugkraft auf den Wellschlauch 2 und insbesondere bei einer zunehmenden Zugkraft die Haltekraft des Halteringes 4 ebenfalls zunimmt, weist der Haltering 4 an seiner der Einsteckrichtung zugewandten Stirnseite, an welcher sich die Trichterfläche 4a befindet, von seiner Stelle größter axialer Dicke ausgehend, radial nach außen zu seinem größten Durchmesser hin eine sich vermindernde Dicke, im Ausführungsbeispiel eine Schrägfläche oder einen Konus 4b auf. Die Lagerungsstelle in der Haltehülse 3 ist als Ringnut 7 ausgebildet und deren der engsten Stelle 6 der Haltehülse 3 zugewandte Begrenzung 8, die sich auf der Seite dieser Schrägfläche 4b des Halteringes 4 befindet, ist gemäß den Figuren 1 bis 3 in analoger Richtung und mit praktisch übereinstimmenden Winkel ebenfalls schräg geformt, so daß gemäß Fig.3 die Schrägfläche 4b an dieser Begrenzung 8 weitgehend flächig anliegen kann. Wird also auf den Wellschlauch 2 eine dem Pfeil Pf1 entgegengerichtete Zugkraft ausgeübt, kann die Schrägfläche 4b an der Begrenzung 8 zur Anlage kommen und eine derartige Zugkraft in eine radial einwärts gerichtete Kraft an dem Haltering 4 umgesetzt werden, so daß dieser bei zunehmender Zugkraft umso stärker in das von ihm beaufschlagte Wellental 2a eingedrückt wird.

Gleichzeitig erkennt man in den Figuren 1 und 2, daß der Durchmesser der Ringnut 7 wenigstens so viel größer als der Außendurchmesser des Halteringes 4 ist, daß der Haltering 4 beim Einführen des Wellschlauches 2 oder bei dem noch zu beschreibenden Lösen mit seinem Innendurchmesser zumindest auf den größten Außendurchmesser der von dem Haltering 4 in Gebrauchsstellung übergriffenen Umfangsrippe oder -welle des Wellschlauches 2 ist, bevor der größte Außendurchmesser des Halteringes 4 in seiner aufgeweiteten Form mit der radialen Begrenzung 9 der Ringnut 7 in Berührung gelangt. In Fig.3 erkennt man, daß bei der größten Aufweitung des Halteringes 4, also wenn eine Welle des Wellschlauches 2 an der Innenseite des Halteringes 4 angeordnet ist, die Außenseite des Halteringes 4 gerade diese radiale Begrenzung 9 der Ringnut 7 berührt.

Damit auch jederzeit eine einfache Demontage des Wellschlauches 2 möglich ist, ist im Ausführungsbeispiel gemäß den Figuren 1 bis 3 an der Haltehülse 3 ein in den Bereich des Halteringes 4 ragendes Lösewerkzeug 10 angeordnet, welches zum Aufweiten des Halteringes 4 entgegen seiner elastischen Rückstellkraft, also aus seiner Halteposition gemäß Fig.2 in die aufgeweitete Position gemäß Fig.3 dient.

Dieses Lösewerkzeug 10 ist dabei als deckelartiger Abschluß der Haltehülse 3 auf der Einsteckseite für den Wellschlauch 2 ausgebildet und angeordnet. Dieser als Lösewerkzeug 10 gestaltete Abschluß hat dabei einen nach innen in die Haltehülse 3 ragenden Bund oder Stutzen 11, der auch durch Schlitze in einzelne Finger oder Zungen aufgeteilt sein könnte und am Ende eine konische, sich verjüngende Formgebung hat, die die radial einwärts gerichtete Schrägfläche oder Trichterfläche 4a an dem Haltering 4 zumindest beim axialen Eindrücken dieses Lösewerkzeuges 10 beaufschlagt und übergreift, wobei die axiale Beweglichkeit für dieses Lösewerkzeug 10 und der oder die Winkel der zusammenwirkenden Schrägflächen so gewählt sind, daß der Haltering 4 radial aus dem Bereich der Vertiefung oder einem Wellental 2a heraus aufweitbar ist, wie es Fig.3 deutlich zeigt. Dabei hat der Bund oder Stutzen 11 des Lösewerkzeuges 10 einen radial nach außen vorstehenden, zweckmäßigerweise umlaufenden Vorsprung 12 und die Haltehülse 3 weist einen radial nach innen ragenden Gegenvorsprung 13 auf, so daß das Lösewerkzeug 10 unverlierbar an der Haltehülse 3 gehalten ist, weil bei einer Zugbewegung an dem Lösewerkzeug 10 entgegen dem Pfeil Pf1 der Vorsprung 12 an dem Gegenvorsprung 13 anschlägt, so daß also in axialer Richtung eine Sicherung gegen ein Herausziehen des Lösewerkzeuges 10 gebildet ist.

Die der Einsteckrichtung entgegengesetzte Unterseite 4c des Halteringes 4 ist im Ausführungsbeispiel ebenfalls von außen nach innen schräg geneigt und zwar über die gesamte radiale Breite des Halteringes 4. Die Schrägungsrichtung ist dabei so, daß der Ringquerschnitt in dem in eine Vertiefung oder ein Wellental 2a eingreifenden Bereich insgesamt konisch ist. Die Schrägungsrichtung an der Unterseite 4c ist also so gewählt, daß die axiale Abmessung an der Innenseite des Halteringes 4 noch weiter vermindert wird, als es ohne eine solche schräge Unterseite 4c der Fall wäre.

Die der schrägen Begrenzung 8 der Ringnut 7 abgewandte zweite Begrenzung 8a ist im Ausführungsbeispiel eben und in einer radialen oder Durchmesserebene der Haltehülse 3 angeordnet, so daß der Haltering 4 zumindest während des Einsteckvorganges an dieser ebenen Begrenzung 8a der Ringnut 7 mit seinem radial äußeren Randbereich anschlägt oder aufliegt. Es ergibt sich somit an dieser Seite des Halteringes 4 praktisch nur eine linienförmige Berührung, was es erleichtert, daß der Haltering 4 nach einer Aufweitung aufgrund seiner Elastizität selbsttätig in seine Ausgangslage zurückkehrt, da diese im Querschnitt schräg gestaltete Unterseite 4c über eventuelle Rauhigkeiten oder gar Unebenheiten der Begrenzung 8a gut hinweggleiten kann. Darüber hinaus wird das Eintreten in ein Wellental 2a erleichtert, selbst wenn dessen Eintritt gegenüber der zweiten Begrenzung 8a axial etwas versetzt ist, wie es Fig.2 andeutet.

Zur Montage des Wellschlauches 2 kann dieser also gemäß Fig.1 in Richtung des Pfeiles Pf1 durch das eine entsprechend groß bemessene Innenlängshöhlung aufweisende Lösewerkzeug 10 hindurch eingeschoben werden. Dabei stößt der Wellschlauch 2 mit einer Welle auf die Trichterfläche 4a des Halteringes 4 und verdrängt diesen in radialer Richtung, bis ein Wellental 2a in den Bereich des Halteringes 4 gelangt. Aufgrund der elastischen Rückstellkraft des vorzugsweise metallischen Halteringes 4 springt dieser dann selbsttätig in ein solches Wellental 2a hinein. Soll der Wellschlauch tiefer eingeschoben werden, kann die nächste Welle den Haltering 4 an seiner Trichterfläche 4a erneut aufweiten, so daß er beispielsweise mit zwei Wellen hinter dem Haltering 4 angeordnet wird, wie es Fig.2 zeigt.

Soll der Haltering 4 wieder demontiert werden, wird das Löserwerkzeug 10 aus der in Fig.2 dargestellten Position in axialer Richtung in Richtung des Pfeiles Pf1 in Fig.1 in die Haltehülse 3 hineingedrückt, so daß sein am Ende oder Rand konisch verjüngter Bund oder Stutzen 11 an der Trichterfläche 4a wirksam wird und den Haltering 4 erneut aufweitet, wie es Fig. 3 zeigt. Dadurch wird der Innenquerschnitt innerhalb der Haltehülse im Bereich des Halteringes 4 so vergrößert, daß die Wellen des Wellschlauches 2 hindurchpassen, der Wellschlauch 2 also in Richtung des Pfeiles Pf2 herausgezogen werden kann.

Dabei sei noch erwähnt, daß der Schrägungswinkel an der Unterseite 4c des Halteringes 4 gegenüber einer Durchmesserebene so spitz oder klein ist, daß eine Zugkraft an dem Wellschlauch 2 nicht zu einer radialen Aufweitung des Halteringes 4 führen kann, sondern Selbsthemmung besteht. Ferner erkennt man noch, daß die radiale Breite der Schräg- oder Trichterfläche 4a groß genug ist, um teilweise in ein Wellental 2a einzugreifen, aber in dieser Position auch den Angriff des Lösewerkzeuges 10 und seines konischen Randes zu ermöglichen.

Die Anschlußarmatur 1 dient zum Festlegen von umfangsgerippten länglichen Körpern wie zum Beispiel Wellschläuchen 2 und hat eine Haltehülse 3, in die der längliche Körper oder Wellschlauch 2 in axialer Richtung einsteckbar und durch wenigstens einen bei dem Einstecken radial nach außen ausweichenden und dann in eine am Umfang des länglichen Körpers oder Wellschlauches 2 umlaufende Vertiefung, zum Beispiel in ein Wellental 2a einrastenden Haltevorsprung verankerbar ist. Als Haltevorsprung dient dabei ein im Inneren der Haltehülse 3 in axialer Richtung fixierter Haltering 4, der aber in radialer Richtung elastisch so weit aufweitbar ist, daß sein Innenquerschnitt zumindest dem größten Außenquerschnitt des länglichen Körpers oder einer Welle des Wellschlauches 2 entspricht. Somit kann der Haltering 4 beim Einschieben des Wellschlauches 2 ausweichen und dann in einer Vertiefung oder einem Wellental 2a einrasten. Ein Haltering 4 aus Kunststoff oder Metall ist dabei an seinem Umfang durch einen Schlitz 5 unterbrochen, so daß sein Aufweiten eine Verbreiterung dieses Schlitzes 5 bedeutet. Eine der Einsteckrichtung entgegengesetzte Schräg- oder Trichterfläche 4a ermöglicht das selbsttätige Aufweiten dieses Halteringes, wenn der zu verankernde längliche Körper oder der Wellschlauch 2 axial dagegengedrückt wird.

## Patentansprüche

1. Anschlussarmatur (1) für umfangsgerippte längliche Körper wie Rohre, Schläuche oder Kabel, insbesondere für Wellschläuche (2), mit einer Haltehülse (3), in welche der längliche Körper oder Wellschlauch (2) axial einsteckbar und durch wenigstens einen bei dem axialen Einstecken radial nach außen ausweichenden und dann in eine an seinem Umfang umlaufende Vertiefung, insbesondere in ein Wellental (2a) einrastenden Haltevorsprung verankerbar ist, wobei als Haltevorsprung im Inneren der Haltehülse (3) wenigstens ein in axialer Richtung gelagerter Haltering (4) angeordnet ist, der an seinem Umfang durch einen Schlitz unterbrochen und durch Verbreiterung des Schlitzes (5) innerhalb seiner Lagerung in radialer Richtung elastisch zumindest so weit aufweitbar ist, dass sein Innenquerschnitt dem größten Außenquerschnitt des länglichen Körpers oder einer Welle des Wellschlauches (2) oder dergleichen entspricht, so dass er beim Einschieben des länglichen Körpers oder Wellschlauches (2) ausweicht und mit einer Vertiefung oder einem Wellental (2a) verrastbar ist **dadurch gekennzeichnet, dass** die Breite des Schlitzes (5) des Halteringes (4) so bemessen ist, dass bei gegenseitiger Berührung der beidseitigen Begrenzungen (5a) des Schlitzes (5) die Außenabmessung des Halteringes (4) gleich oder größer ist als die beiden engsten, sich dem Sitz des Halteringes (4) in beiden axialen Richtungen anschließenden Innenabmessungen der Haltehülse (3).

2. Anschlussarmatur nach Anspruch 1, **dadurch gekennzeichnet, dass** der Schlitz (5) den Haltering (4) radial oder schräg verlaufend unterbricht.

3. Anschlussarmatur nach Anspruch 1 oder 2, **dadurch gekennzeichnet, dass** die der Einsteckrichtung des länglichen Körpers oder Wellschlauches (2) zugewandte Stirnseite des Halteringes (4) zumindest über einen Teil seiner radialen Breite zur Mitte (M) des Halteringes (4) hin schräg abfallend, insbesondere konisch oder trichterförmig geformt ist.

4. Anschlussarmatur nach einem der Ansprüche 1 bis 3, **dadurch gekennzeichnet, dass** die Dicke oder axiale Abmessung des Halteringes (4) an seiner Innenseite bzw. seinem Innendurchmesser kleiner als die axiale Abmessung eines Wellentales (2a) des Wellschlauches (2) und seine radial weiter außenliegende größte Dicke größer als die axiale Abmessung einer Vertiefung oder eines Wellentales (2a) ist.

5. Anschlussarmatur nach einem der Ansprüche 1 bis 4, **dadurch gekennzeichnet, dass** der Haltering (4) an seiner der Einsteckrichtung zugewandten Stirnseite von seiner Stelle größter axialer Dicke ausgehend nach außen zu seinem größten Durchmesser hin eine sich vermindernde Dicke, insbesondere eine Schrägfläche oder einen Konus (4b) aufweist und dass die Lagerungsstelle in der Haltehülse (3) als Ringnut (7) ausgebildet ist, deren Begrenzung (8) zumindest auf der Seite dieser Schrägfläche (4b) des Halteringes (4) insbesondere in analoger Richtung schräg geformt ist, und dass der Durchmesser der Ringnut (7) wenigstens so viel größer als der Außendurchmesser des Halteringes (4) ist, dass der Haltering (4) beim Einführen des länglichen Körpers oder des Wellschlauches (2) oder beim Lösen des länglichen Körpers oder des Wellschlauches (2) mit seinem Innendurchmesser zumindest auf den größten Außendurchmesser der von dem Haltering (4) in Gebrauchsstellung übergriffenen Umfangsrippe oder Wellen ist.

6. Anschlussarmatur nach einem der Ansprüche 1 bis 5, **dadurch gekennzeichnet, dass** an der Haltehülse (3) ein in den Bereich des Halteringes (4) ragendes Lösewerkzeug (10) angeordnet ist, welches zum Aufweiten des Halteringes (4) entgegen seiner elastischen Rückstellkraft dient.

7. Anschlussarmatur nach Anspruch 6, **dadurch gekennzeichnet, dass** das Lösewerkzeug (10) als deckelartiger Abschluß der Haltehülse (3) insbesondere auf der Einsteckseite für den länglichen Körper oder Wellschlauch (2) ausgebildet ist, welcher Abschluß einen nach innen in die Haltehülse (3) ragenden Bund oder Stutzen (11) oder einzelne Finger vorzugsweise mit einer konischen Formgebung am freien, axial innenliegenden Ende oder Rand hat, die die radial einwärts gerichtete Schrägfläche oder Trichterfläche (4a) an dem Haltering (4) zumindest beim axialen Eindrücken des Lösewerkzeuges (10) beaufschlagt oder übergreifen, wobei die axiale Beweglichkeit für dieses Lösewerkzeug (10) und der oder die Winkel der zusammenwirkenden Schrägflächen so gewählt sind, dass der Haltering (4) radial aus dem Bereich der Vertiefung oder einem Wellental (2a) aufweitbar ist.

8. Anschlussarmatur nach Anspruch 7, **dadurch gekennzeichnet, dass** der Bund oder Stutzen (11) des Lösewerkzeugs (10) wenigstens einen radial nach außen vorstehenden, insbesondere umlaufenden Vorsprung (12) und die Haltehülse (3) einen radial nach innen ragenden Gegenvorsprung (13) aufweisen.

9. Anschlussarmatur nach einem der Ansprüche 1 bis 8, **dadurch gekennzeichnet, dass** die der Einsteckrichtung entgegengesetzte Unterseite (4c) des Halteringes (4) von außen nach innen geneigt und zumindest über einen Teil der Breite, vorzugsweise über die gesamte radiale Breite schräg verläuft, so dass der Ringquerschnitt zumindest in dem in eine Vertiefung oder in ein Wellental (2a) eingreifenden Bereich insgesamt konisch ist.

10. Anschlussarmatur nach Anspruch 5 oder einem der Ansprüche 6 bis 9 wenn auf Anspruch 5 rückbezogen, **dadurch gekennzeichnet, dass** die der schrägen Begrenzung (8) der Ringnut (7) abgewandte zweite Begrenzung (8a) eben und in einer radialen Ebene angeordnet ist und der Haltering (4) zumindest während des Einsteckvorganges an dieser ebenen Begrenzung der Ringnut (7) mit seinem radial äußeren Randbereich anschlägt oder aufliegt.

11. Anschlussarmatur nach einem der vorstehenden Ansprüche, **dadurch gekennzeichnet, dass** der Haltering (4) derart in axialer Richtung gelagert ist, dass er gegen axiale Verschiebungen weitestgehend gesperrt oder gesichert ist.

## Claims

1. Connecting fitting (1) for circumferentially ribbed elongate bodies, such as pipes, hoses or cables, more especially for corrugated hoses (2), said fitting having a retaining sleeve (3), into which the elongate body or corrugated hose (2) is axially insertable and is securable by at least one retaining projection, which yields radially outwardly during the axial insertion process and then locks in position in a recess, which extends around its circumference, more especially in a corrugation trough (2a), at least one retaining ring (4) being disposed as the retaining projection in the interior of the retaining sleeve (3), said ring being mounted in the axial direction and being interrupted at its circumference by a slot, said ring being at least resiliently expandable by widening the slot (5) internally of its mounting support in the radial direction to such an extent that its internal cross-section corresponds to the greatest external cross-section of the elongate body or of a corrugation of the corrugated hose (2) or the like, so that it yields during the insertion of the elongate body or corrugated hose (2) and is lockable with a recess or a corrugation trough (2a), **characterised in that** the width of the slot (5) of the retaining ring (4) is so dimensioned that, in the event of mutual contact between the boundaries (5a) on both sides of the slot (5), the external dimension of the retaining ring (4) is identical to or greater than the two narrowest internal dimensions of the retaining sleeve (3), said dimensions communicating with the seat of the retaining ring (4) in both axial directions.

2. Connecting fitting according to claim 1, **characterised in that** the slot (5) interrupts the retaining ring (4) while extending radially or inclinedly.

3. Connecting fitting according to claim 1 or 2, **characterised in that** the end face of the retaining ring (4), facing the direction of insertion of the elongate body or corrugated hose (2), is shaped to slope downwardly, at least over a portion of its radial width towards the centre (M) of the retaining ring (4), and more especially it is conical or funnel-shaped.

4. Connecting fitting according to one of claims 1 to 3, **characterised in that** the thickness or axial dimension of the retaining ring (4) is smaller at its inside, or respectively at its internal diameter, than the axial dimension of a corrugation trough (2a) of the corrugated hose (2), and its radially further external greatest thickness is greater than the axial dimension of a recess or of a corrugation trough (2a).

5. Connecting fitting according to one of claims 1 to 4, **characterised in that** the retaining ring (4) has, at its end face facing the direction of insertion, a reducing thickness extending from its location of greatest axial thickness outwardly to its greatest diameter, more especially an inclined surface or a cone (4b), and **in that** the mounting location in the retaining sleeve (3) is in the form of an annular groove (7), the boundary (8) of which is inclinedly shaped, more especially in an analogous direction, at least on the side of this inclined face (4b) of the retaining ring (4), and **in that** the diameter of the annular groove (7) is at least so much greater than the external diameter of the retaining ring (4) that the retaining ring (4), during the introduction of the elongate body or of the corrugated hose (2) or during the loosening of the elongate body or of the corrugated hose (2), has its internal diameter at least on the greatest external diameter of the circumferential rib or corrugations overlapped by the retaining ring (4) in the position of use.

6. Connecting fitting according to one of claims 1 to 5, **characterised in that** a loosening tool (10), which protrudes into the region of the retaining ring (4), is disposed on the retaining sleeve (3) and serves to widen the retaining ring (4) in opposition to its resilient restoring force.

7. Connecting fitting according to claim 6, **characterised in that** the loosening tool (10) is in the form of a cover-like end closure of the retaining sleeve (3), more especially on the insertion side for the elongate body or corrugated hose (2), which end closure has a collar or connection piece (11) protruding inwardly into the retaining sleeve (3), or it has individual fingers preferably having a conical configuration at the free, axially internal end or edge, which fingers act on or overlap the radially inwardly orientated inclined face or funnel-shaped face (4a) on the retaining ring (4), at least during the axial pressing-in of the loosening tool (10), the axial mobility for this loosening tool (10) and the angle or angles of the co-operating inclined faces being so selected that the retaining ring (4) is radially widenable from the region of the recess or one corrugation trough (2a).

8. Connecting fitting according to claim 7, **characterised in that** the collar or connection piece (11) of the loosening tool (10) has at least one radially outwardly protruding, more especially circumferential projection (12), and the retaining sleeve (3) has a radially inwardly protruding counter-projection (13).

9. Connecting fitting according to one of claims 1 to 8, **characterised in that** the underside (4c) of the retaining ring (4), opposed to the direction of insertion, is inclined from .externally inwardly and extends inclinedly at least over a portion of the width, preferably over the entire radial width, so that the.ring cross-section is generally conical, at least in the region engaging in a recess or in a corrugation trough (2a).

10. Connecting fitting according to claim 5 or one of claims 6 to 9, when relating to claim 5, **characterised in that** the second boundary (8a), remote from the inclined boundary (8) of the annular groove (7), is disposed in a flat manner and in a radial plane, and the retaining ring (4) abuts against or lies on this flat boundary of the annular groove (7) with its radially outer edge region, at least during the insertion process.

11. Connecting fitting according to one of the preceding claims, **characterised in that** the retaining ring (4) is mounted in the axial direction in such a manner that it is largely blocked or prevented from effecting axial displacements.

## Revendications

1. Armature de raccordement (1) pour corps allongés nervurés sur leur pourtour, tels que des tuyaux, des tuyaux souples ou des câbles, notamment pour des tuyaux souples ondulés (2), comprenant une douille de retenue (3) dans laquelle le corps allongé ou tuyau souple ondulé (2) peut être enfoncé axialement et être ancré par au moins une saillie de retenue qui, lors de l'enfoncement axial, s'écarte radialement vers l'extérieur, puis vient s'enclencher dans un renfoncement périphérique, notamment dans un creux d'ondulation (2a), sachant qu'au moins une bague de retenue (4) montée dans la direction axiale est disposée à l'intérieur de la douille de retenue (3) en tant que saillie de retenue, laquelle est interrompue sur son pourtour par une fente et peut être écartée de manière élastique dans la direction radiale à l'intérieur de son logement en élargissant la fente (5) jusqu'à ce que sa section transversale intérieure corresponde à la section transversale extérieure maximale du corps allongé ou d'une ondulation du tuyau souple ondulé (2) ou analogue, de manière à ce qu'elle puisse s'écarter lors de l'insertion du corps allongé ou tuyau souple ondulé (2) et s'enclencher dans un renfoncement ou un creux d'ondulation (2a), **caractérisée en ce que** la largeur de la fente (5) de la bague de retenue (4) est telle que lorsque les deux bords (5a) de la fente (5) se touchent, la dimension extérieure de la bague de retenue (4) soit égale ou supérieure aux deux dimensions intérieures les plus étroites de la douille de retenue (3), qui font suite à l'emplacement de la bague de retenue (4) dans les deux directions axiales.

2. Armature de raccordement selon la revendication 1, **caractérisée en ce que** la fente (5) interrompt la bague de retenue (4) dans la direction radiale ou en biais.

3. Armature de raccordement selon la revendication 1 ou 2, **caractérisée en ce que** la face frontale de la bague de retenue (4) qui fait face au sens d'introduction du corps allongé ou tuyau souple ondulé (2) a, au moins sur une partie de sa largeur radiale, une forme inclinée vers le milieu (M) de la bague de retenue (4), notamment conique ou en entonnoir

4. Armature de raccordement selon l'une des revendications 1 à 3, **caractérisée en ce que** l'épaisse ou la dimension axiale de la bague de retenue (4) sur sa face interne ou son diamètre intérieur est inférieure à la dimension axiale d'un creux d'ondulation (2a) du tuyau souple ondulé (2) et son épaisseur maximale plus à l'extérieur dans la direction radiale, supérieure à la dimension axiale d'un renfoncement ou d'un creux d'ondulation (2a).

5. Armature de raccordement selon l'une des revendications 1 à 4, **caractérisée en ce que** la bague de retenue (4) présente sur sa face frontale faisant face au sens d'introduction une épaisseur allant en diminuant de l'endroit où l'épaisseur axiale est maximale, vers l'extérieur, jusqu'à son diamètre maximal, notamment une surface oblique ou un cône (4b), et **en ce que** le logement dans la douille de retenue (3) est réalisé en tant que rainure annulaire (7) dont le bord (8) est notamment incliné dans la même direction, tout au moins sur le côté de cette surface inclinée (4b) de la bague de retenue (4), et **en ce que** le diamètre de la rainure annulaire (7) est supérieur au diamètre extérieur de la bague de retenue (4) au moins au point que, lors de l'introduction du corps allongé ou tuyau souple ondulé (2) ou lors du retrait du corps allongé ou tuyau souple ondulé (2), le diamètre intérieur de la bague de retenue (4) soit au moins égal au diamètre extérieur maximal de la nervure périphérique ou ondulation que la bague de retenue (4) entoure en position d'utilisation.

6. Armature de raccordement selon l'une des revendications 1 à 5, **caractérisée en ce qu'**un outil de retrait (10) pénétrant dans la zone de la bague de retenue (4) est placé sur la douille de retenue (3), qui sert à écarter la bague de retenue (4) contre sa force de rappel élastique.

7. Armature de raccordement selon la revendication 6, **caractérisée en ce que** l'outil de retrait (10) est conçu comme une sorte de couvercle de la douille de retenue (3) notamment sur le côté d'introduction du corps allongé ou tuyau souple ondulé (2), lequel couvercle possède un épaulement ou manchon (11) rentrant dans la douille de retenue (3) ou différents doigts avec une forme de préférence conique à l'extrémité ou bord libre situé axialement à l'intérieur, qui, tout au moins lors de l'enfoncement axial de l'outil de retrait (10), respectivement sollicite la surface oblique ou en entonnoir (4a) de la bague de retenue (4) qui rentre radialement ou s'enclenchent par dessus celle-ci, sachant que la mobilité axiale de cet outil de retrait (10) et l'angle ou les angles des surfaces obliques coopérant entre elles sont choisis de telle manière que la bague de retenue (4) puisse être écartée radialement de manière à sortir de la zone du renfoncement ou d'un creux d'ondulation (2a).

8. Armature de raccordement selon la revendication 7, **caractérisée en ce que** l'épaulement ou manchon (11) de l'outil de retrait (10) présente au moins une saillie notamment périphérique (12) faisant saillie radialement vers l'extérieur et la douille de retenue (3), une saillie complémentaire (13) faisant saillie radialement vers l'intérieur.

9. Armature de raccordement selon l'une des revendications 1 à 8, **caractérisée en ce que** la face inférieure (4c) de la bague de retenue (4) qui est situé à l'opposé du sens d'introduction est inclinée de l'extérieur vers l'intérieur et s'étend en biais sur au moins une partie de la largeur, préférentiellement sur toute la largeur radiale, de manière à ce que la section transversale de la bague soit dans l'ensemble conique au moins dans la zone s'encastrant dans un renfoncement ou un creux d'ondulation (2a).

10. Armature de raccordement selon la revendication 5 ou Tune des revendications 6 à 9 si elle se réfère à la revendication 5, **caractérisée en ce que** le second bord (8a) opposé au bord oblique (8) de la rainure annulaire (7) est plan et est situé dans un plan radial, et **en ce qu'**au moins pendant l'introduction, la bague de retenue (4) bute contre ou repose sur ce bord plan de la rainure annulaire (7) avec sa zone périphérique située radialement à l'extérieur.

11. Armature de raccordement selon Tune des revendications précédentes, **caractérisée en ce que** la bague de retenue (4) est montée dans la direction axiale de telle sorte qu'elle soit dans une large mesure bloquée ou immobilisée pour l'empêcher d'effectuer tout déplacement axial.
